# EUROPÄISCHE PATENTSCHRIFT

(11) **EP 0 346 691 B1**
(45) Veröffentlichungstag und Bekanntmachung des Hinweises auf die Patenterteilung: **17.11.1994**
(21) Anmeldenummer: 89109887.3
(22) Anmeldetag: 01.06.1989
(51) Int. Cl.: C08K 5/23

(54) **Verfahren zum Färben thermoplastischer Kunststoffe in der Masse**
Process for dyeing thermoplastic materials in the mass
Procédé de coloration en masse des matières thermoplastiques

(30) Priorität: 14.06.1988 DE 3820191
(43) Veröffentlichungstag der Anmeldung: 20.12.1989
(73) Patentinhaber: BAYER AG, 51368 Leverkusen (DE)
(72) Erfinder: Hamprecht, Rainer, Dr., D-5068 Odenthal-Blecher (DE); Kressner, Michael, D-5653 Leichlingen (DE); Pape, Georg, Dr., D-5090 Leverkusen 3 (DE)

(56) Entgegenhaltungen:
- EP-A- 0 025 903
- DE-A- 3 404 130

## Beschreibung

Die Erfindung betrifft ein Verfahren zum Färben von Polystyrol, Polystyrol-Copolymerisaten, wie Styrol-Acrylnitril-Copolymere (SAN), Styrol-Butadien-Copolymere (SB) und Styrol-α-Methylstyrol-Copolymere (SMS) oder Polymethacrylaten, insbesondere Polymethylmethacrylat in der Masse mit dem Farbstoff der Formel I. 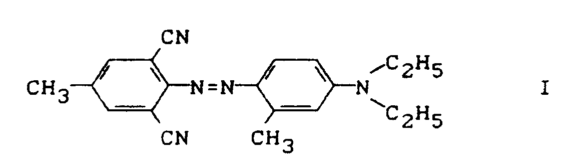
Der erfindungsgemäß zu verwendende Farbstoff ist bekannt aus EP-A-00 25 903. Ähnliche Farbstoffe werden gemäß DE-A-3404130 zum Färben von Fasern-bildenden Polymerisaten verwendet.

Die erwähnten hochmolekularen Verbindungen können einzeln oder in Gemischen, als plastische Massen oder Schmelzen, die gegebenenfalls zu Fasern versponnen werden können, vorliegen.

Die zu färbenden Kunststoffe werden zweckmäßig in Form von Pulver, Schnitzeln oder Granulaten mit dem Farbstoff innig vermischt. Dies kann beispielsweise durch Panieren der Kunststoffteilchen mit dem fein verteilten trockenen Farbstoffpulver oder durch Behandeln der Teilchen mit einer Lösung bzw. Dispersion des Farbstoffs in einem organischen Lösungsmittel und nachheriger Entfernung des Lösungsmittels geschehen.

In das erfindungsgemäße Verfahren können auch Mischungen mit anderen Farbstoffen und/oder anorganischen bzw. organischen Pigmenten eingesetzt werden.

Das erfindungsgemäße Verfahren kann auch in der Weise durchgeführt werden, daS man den Farbstoff dem Monomeren(gemisch) oder einem Vorpolymerisat vor oder während der Polymerisation zugibt, z.B. indem man den Farbstoff im Monomeren(gemisch) löst.

Das Verhältnis von Farbstoff zu Kunststoff kann, je nach der gewünschten Farbstärke, innerhalb weiter Grenzen schwanken. Im allgemeinen empfiehlt sich die Verwendung von 0,005-30 Teilen, vorzugsweise 0,01-3 Teilen, Farbstoff auf 100 Teile Kunststoff.

Die behandelten Polymerteilchen werden nach bekannten Verfahren im Extruder geschmolzen und zu Gegenständen, z.B. Folien oder Fasern, ausgepreßt oder zu Platten gegossen.

Die Farbgebung der Kunststoffe mit dem Farbstoff der Formel (I) erfolgt beispielsweise derart, daß man den Farbstoff, gegebenenfalls in Form von Masterbatches, diesen Substraten unter Verwendung von Walzwerken, Misch- oder Mahlapparaten zumischt. Das gefärbte Material wird hierauf nach an sich bekannten Verfahren wie Kalandrieren, Fressen, Strangpressen, Streichen, Gießen oder Spritzguß in die gewünschte endgültige Form gebracht.

Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B Ester der Phosphorsäure, Phthalsäure oder Sebacinsäure dienen. Die Weichmacher können im erfindungsgemäßen Verfahren vor oder nach der Einverleibung des Farbstoffes in die Polymeren eingearbeitet werdend Es ist ferner möglich, zwecks Erzielung verschiedener Farbtöne den hochmolekularen, organischen Stoffen neben der Verbindung der Formel (I) noch Füllstoffe bzw. andere farbgebende Bestandteile wie Weiß-, Bunt- oder Schwarzpigmente in beliebigen Mengen zuzufügen.

Die erhaltenen roten Färbungen zeichnen sich durch gute Licht- und Wetterechtheiten aus. Darüber hinaus besitzt der erfindungsgemäße Farbstoff in den thermoplastischen Kunststoffen sehr gute Hitzeechtheiten. Diese Eigenschaft ist für Azofarbstoffe ausgesprochen überraschend und war nicht vorherzusehen.

Wegen der mangelnden Hitzebeständigkeit von Azofarbstoffen werden technisch vorzugsweise Anthrachinonfarbstoffe eingesetzt. Gegenüber letzteren z.B. C.I. Solvent Red 111 zeichnet sich der erfindungsgemäß eingesetzte Farbstoff durch bessere Sublimationsbeständigkeit und vor allem sehr viel höhere Farbstärke aus, wodurch das erfindungsgemäße Verfahren besonders wirtschaftlich wird.

### Beispiel 1

0,1 g des Farbstoffes der Formel 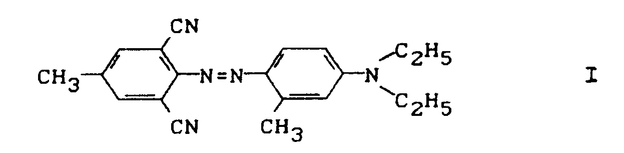
2 g Titandioxid (Bayertitan® R-FK-2) und 100 g eines Polystyrolgranulats werden in einem verschlossenen Gefäß 2 Stunden auf dem Rollbock vermischt. Die erhaltene Mischung wird bei ca. 230°C in Strängen von 2 cm Breite extrudiert und wieder granuliert. Das Granulat wird mit Hilfe einer Spritzgußmaschine bei 230-240°C zu Formlingen verspritzt. Man erhält rot gefärbte Formlinge mit einer hohen Lichtbeständigkeit.

### Beispiel 2

0,02 g des Farbstoffes der Formel I und 100 g eines Polystyrolgranulates werden in einem verschlossenen Gefäß 2 Stunden auf dem Rollbock vermischte Das Gemisch wird anschließend bei 230°-240°C mit Hilfe einer Schneckenspritzgießmaschine zu Formlingen verspritzt. Die rot gefärbten, transparenten Formlinge weisen eine hohe Lichtechtheit auf.

### Beispiel 3

In 99,97 g Methylmethacrylat werden 0,03 g Farbstoff der Formel I gelöst. Nach Zugabe von 0,1 g Dibenzoylperoxid wird die Lösung auf 120°C erhitzt und die Polymerisation gestartet. Nach 30 Minuten wird das anpolymerisierte Methylmethacrylat zwischen zwei Glasplatten bei 80°C während zehn Stunden auspolymerisiert. Man erhält rot gefärbte, transparente Polymethylmethacrylat-Platten.

## Patentansprüche

1. Verfahren zum Färben von Polystyrol, Polystyrol-Copolymerisaten oder Polymethacrylaten, insbesondere Polymethylmethacrylat, in der Masse mit dem Farbstoff der Formel

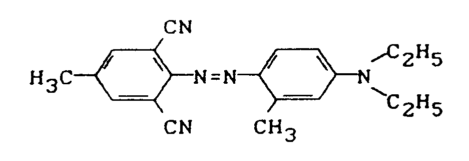

2. Verfahren gemäß Anspruch 1, dadurch gekennzeichnet, daß man den Farbstoff dem den zu färbenden Kunststoff bildenden Monomeren(gemisch) oder einem Vorpolymerisat vor oder während der Polymerisation zusetzt.

3. Nach dem Verfahren der Ansprüche 1-2 gefärbte Kunststoffe.

## Claims

1. Process for the mass coloration of polystyrene, polystyrene copolymers or polymethacrylates, in particular polymethyl methacrylate, with the dyestuff of the formula

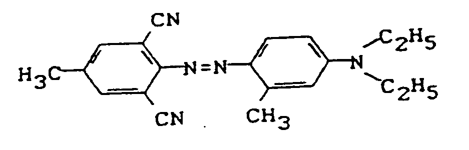

2. Process according to Claim 1, characterized in that the dyestuff is added to the monomer (mixture) forming the plastic to be coloured or to a prepolymer before or during the polymerization.

3. Plastics coloured by the process of Claims 1-2.

## Revendications

1. Procédé pour colorer le polystyrène, les copolymères de polystyrène ou les polyméthacrylates, en particulier le polyméthylméthacrylate, dans la masse avec le colorant de formule

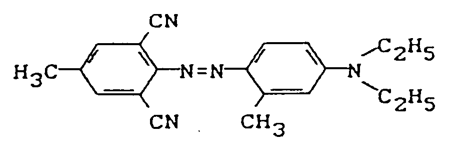

2. Procédé selon la revendication 1, caractérisé en ce que l'on ajoute le colorant dans le (mélange de) monomère(s) ou dans un prépolymère formant la substance synthétique à colorer avant ou durant la polymérisation.

3. Substances synthétiques colorées selon le procédé des revendications 1 - 2.
